# EUROPEAN PATENT APPLICATION

(11) **EP 4 629 100 A1**
(43) Date of publication of application: **08.10.2025**
(21) Application number: 24878890.3
(22) Date of filing: 10.10.2024
(51) Int. Cl.: G06F 16/532, G06F 16/55

(54) **TEMPLATE LIBRARY CONSTRUCTION AND RETRIEVAL METHOD AND APPARATUS**

(30) Priority: 19.10.2023 CN 202311360670
(71) Applicant: NUCTECH COMPANY LIMITED, Beijing 100084 (CN); Tsinghua University, Haidian District, Beijing 100084 (CN)
(72) Inventor: ZHANG, Li, Beijing 100084 (CN); SUN, Yunda, Beijing 100084 (CN); FU, Gang, Beijing 100084 (CN); LI, Qiang, Beijing 100084 (CN); SHI, Jie, Beijing 100084 (CN)
(74) Representative: Cabinet Beau de Loménie
(86) International application number: PCT/CN2024/124021
(87) International publication number: WO 2025/082246

(57) **Abstract**

The present application relates to a template library construction and retrieval method and apparatus. The method comprises: a template library construction step, involving: for template images, on the basis of a variational autoencoder, acquiring hidden vectors corresponding to the template images, and storing the hidden vectors to construct a template library; and a template library retrieval step, involving: for a test image, on the basis of a variational autoencoder, acquiring a hidden vector corresponding to the test image, and using the hidden vector to perform retrieval in the template library, so as to obtain template data. In the present application, by means of such a template library construction and retrieval method and apparatus, the template library construction and retrieval efficiency can be improved.

## Description

### CROSS-REFERENCE TO RELATED APPLICATIONS

The present disclosure claims the priority to Chinese Patent Application No. 202311360670.X, filed on Oct. 19, 2023, and titled "TEMPLATE LIBRARY CONSTRUCTION AND RETRIEVAL METHOD AND APPARATUS", which is incorporated herein by reference in its entirety.

### TECHNICAL FIELD

The present application relates to the field of security inspection, and in particular to a template library construction and retrieval method, and a construction and retrieval apparatus.

### BACKGROUND

In recent years, with the development and popularity of deep neural network technology, it has become an important method in image recognition and classification tasks. However, training a high-precision deep neural network requires a large amount of labeled data, and these data sets typically need to be classified and labeled in a large number of image samples. Therefore, in practical applications, constructing a reliable image template library to support the training and application of deep neural network has become a necessary task.

For example, in an application scenario of performing security inspection on a vehicle such as a truck, it is necessary to construct a vehicle template library based on radiation images of the vehicle, and retrieve vehicle template from the vehicle template library.

### SUMMARY

The present application proposes a generative template library construction and retrieval method and a template library construction and retrieval apparatus which can improve the template library construction and retrieval efficiency.

In a first aspect, the present application provides a template library construction and retrieval method, comprising: a template library construction step of acquiring, for a template image, a latent vector corresponding to the template image based on a variational autoencoder, and storing the latent vector to construct a template library; and a template library retrieval step of acquiring, for a test image, a latent vector corresponding to the test image based on the variational autoencoder, and retrieving template data from the template library using the latent vector.

In the above template library construction and retrieval method, the template library retrieval step comprises retrieving the template data corresponding to the test image based on only Euclidean distance between the latent vector corresponding to the test image and the latent vector in the template library.

In the above template library construction and retrieval method, the template library retrieval step comprises calculating Euclidean distance between the latent vector corresponding to the test image and the latent vector in the template library, ranking the Euclidean distance, and taking template data corresponding to the latent vector having the smallest Euclidean distance in the template library as the template data of the test image.

In the above template library construction and retrieval method, the template library construction step comprises training, for each template image, a generative variational autoencoder, and directly taking a mean value of the trained variational autoencoder as the corresponding latent vector.

In the above template library construction and retrieval method, the template image and the test image are X-ray images.

In the above template library construction and retrieval method, the template library is a template library of vehicles, and the template image and the test image are X-ray images of vehicles.

In a second aspect, the present application provides a template library construction and retrieval apparatus, comprising: a template library construction module, configured to acquire, for a template image, a latent vector corresponding to the template image based on a variational autoencoder, and store the latent vector to construct a template library; and a template library retrieval module, configured to acquire, for a test image, a latent vector corresponding to the test image based on the variational autoencoder, and retrieve template data from the template library using the latent vector.

In the above template library construction and retrieval apparatus, the template library retrieval module is configured to retrieve the template data corresponding to the test image based on only Euclidean distance between the latent vector corresponding to the test image and the latent vector in the template library.

In the above template library construction and retrieval apparatus, the template library retrieval module is configured to calculate Euclidean distance between the latent vector corresponding to the test image and the latent vector in the template library, rank the Euclidean distance, and take template data corresponding to the latent vector having the smallest Euclidean distance in the template library as the template data of the test image.

In the above template library construction and retrieval apparatus, the template library construction module is configured to train, for the template image, a generative variational autoencoder, and directly take a mean value of the trained variational autoencoder as the corresponding latent vector.

In the above template library construction and retrieval apparatus, the template image and the test image are X-ray images.

In the above template library construction and retrieval apparatus, the template library is a template library of vehicles, and the template image and the test image are X-ray images of vehicles.

In a third aspect, the present application provides a computer-readable storage medium causing a computer to perform processing of: acquiring, for a template image, a latent vector corresponding to the template image based on a variational autoencoder, and storing the latent vector to construct a template library; and acquiring, for a test image, a latent vector corresponding to the test image based on the variational autoencoder, and retrieving in the template library using the latent vector to obtain template data.

In the present application, the latent vector is directly stored, and template data is retrieved from the template library using the latent vector. By doing so, there is neither need to keep the distribution continuously approaching a normal distribution nor need to minimize a difference between input data and generated data, whereby the template library construction and retrieval efficiency can be improved. In addition, by using only Euclidean distance to retrieve template data, there is no need to use more computing resources. Thus, the retrieval efficiency is higher, and the obtained template is more accurate. Moreover, by directly taking a mean value as the latent vector, the influence of randomness of a generative model can be reduced to facilitate achieving accuracy of subsequent operations such as target recognition, and the template library generation efficiency can be improved.

### BRIEF DESCRIPTION OF THE DRAWINGS

Fig. 1 shows a brief flow chart of a template library construction and retrieval method according to a first embodiment;
Fig. 2 shows a variational autoencoder VAE in the prior art;
Fig. 3 shows a modified variational autoencoder VAE according to the present application;
Fig. 4 shows a brief flow chart of an example of a template library construction and retrieval method according to the present application;
Fig. 5 shows an X-ray image of a truck scanned by X-ray;
Fig. 6 shows a schematic structural view of a template library construction and retrieval apparatus according to a second embodiment;
Fig. 7 shows a schematic structural view of an example of a template library construction and retrieval apparatus; and
Fig. 8 shows a schematic structural view of an electronic device according to a third embodiment of the present application.

### Reference Numerals:

100: template library construction and retrieval apparatus;
10: template library construction module;
20: template library retrieval module;
11: model training module;
12: algorithm inference module;
13: template storage module;
111: input module;
112: training module;
113: determination module;
114: storage module;
21: test image input module;
22: latent vector acquisition module;
23: Euclidean distance calculation module;
24: template data acquisition module;
801: processor;
802: memory;
803: communication interface; and
810: bus.

### DETAILED DESCRIPTION

Exemplary embodiments or implementations of the present application will be described in more detail below with reference to the drawings. Although exemplary embodiments of the present application are shown in the drawings, it should be understood that, the present application may be implemented in various forms and should not be limited to the embodiments or implementations set forth herein. These embodiments or implementations are provided such that the present application may be more clearly understood.

The terms such as "first", "second" in the description and claims of the present application are used for distinguishing similar objects but are not used for describing a specific order or sequence. It should be understood that, these terms are interchangeable under appropriate circumstances such that the embodiments or examples of the present application described herein are capable of implementation in other sequences than illustrated or described ones. In addition, the terms "comprise" and "include" and any variations thereof are intended to cover non-exclusive inclusions. For example, a process, method, system, product, or device that includes a series of steps or units is not limited to the clearly listed steps or units, but may include other steps or units that are not clearly listed. The same or similar reference numerals in the present application represent components having the same or similar functions.

Currently known template construction models based on neural network mainly include two types, that is, generative model and discriminative model.

The generative model learns a joint probability distribution of input and output variables, and may generate new data samples by sampling from the distribution. The generative model needs to completely store all features of the data to generate new data with more diversity.

The discriminative model learns different categories or boundaries between different categories. Color, texture structure, and the like of data are the most important features for distinguishing boundaries. For new data and unseen data, the discriminative model may specifically classify the data by extracting features such as color, texture, and the like of a target and calculating a classification score.

Different from the generative model, when extracting features, the discriminative model will select features with larger boundary distances as the main determination method of final determination, while the generative model will retain all data features. Although in calculating similarity, both the generative model and the discriminative model may be used as feature extractors, their results depend on subsequent evaluation tools to greatly different extents.

In the prior art, there is a technology that uses a discriminative neural network to construct a template library, and the specific method is: firstly, manual classification of data at either global or local level is carried out, data labels are added, and the discriminative neural network is trained until the discriminative network converges; secondly, a last fully-connected layer of the discriminative neural network is removed, and the existing data is reasoned in batches to obtain 1*N features of network outputs; and finally, the features are stored to a template library to complete the template library construction.

In a template library of a discriminative neural network in the prior art, when retrieving a template, a combination of a cosine distance and other evaluation indexes is typically used for retrieving template. Although it may meet the demand to a certain extent, when the storage capacity of the template library is huge, the combination evaluation retrieval method will consume a lot of retrieval time, while one single retrieval method cannot obtain the optimal and most similar latent vectors, and thus the efficiency is low.

After intensive research and the above analysis, the inventors of the present application have found that the discriminative model has these problems. Therefore, in the present application, a generative model is used for achieving template library construction and retrieval. Hereinafter, the variational autoencoder (VAE) used in the present application belongs to the generative model.

### A First Embodiment

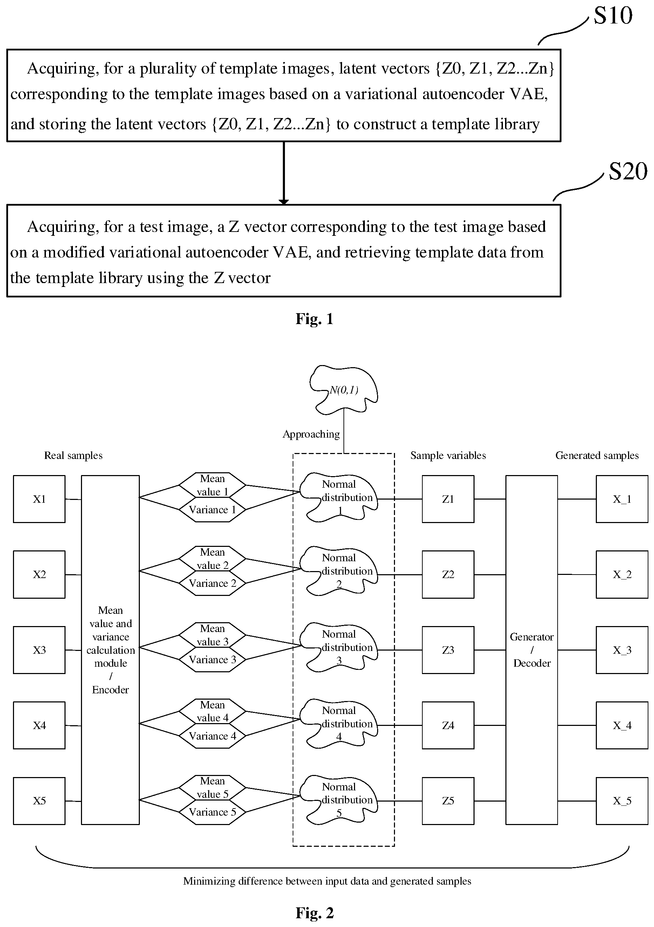

A first embodiment of the present application provides a template library construction and retrieval method. Fig. 1 shows a brief flow chart of a template library construction and retrieval method according to a first embodiment.

The template library construction and retrieval method according to this embodiment includes a template library construction step S10 and a template library retrieval step S20.

In S10, for a plurality of template images, latent vectors {Z0, Z1, Z2 ... Zn} corresponding to the template images are acquired based on a variational autoencoder VAE, and the latent vectors {Z0, Z1, Z2 ... Zn} are stored to construct a template library.

The variational autoencoder VAE is a generative autoencoder model.

Fig. 2 shows a variational autoencoder VAE in the prior art.

As shown in Fig. 2, the variational autoencoder VAE includes a mean value and variance calculation module (also called encoder) and a generator (also called decoder).

The process of generating new sample data by the variational autoencoder VAE is shown in Fig. 2. Specifically, each input data (X1, X2, X3, X4, X5) is input into the mean value and variance calculation module to obtain a mean value and a variance (mean value 1 and variance 1, mean value 2 and variance 2, mean value 3 and variance 3, mean value 4 and variance 4, mean value 5 and variance 5) corresponding to each input data. For each input data (X1, X2, X3, X4, X5), based on the mean value and the variance, a normal distribution (normal distribution 1, normal distribution 2, normal distribution 3, normal distribution 4, normal distribution 5) is obtained and is made to approximate a standard normal distribution (N (0, 1)). Then, each latent vector (also referred to as Z vector) (Z1, Z2, Z3, Z4, Z5) is sampled from a normal distribution approaching the standard normal distribution according to the mean value and the variance, and generated data (X_1, X_2, X_3, X_4, X_5) similar to the input data is generated through the generator.

In addition to needing to optimize the obtained distribution such that it continuously approaches a normal distribution, such a variational autoencoder VAE algorithm also needs to minimize a difference between the input data and the generated data. That is, as shown in Fig. 2, it needs to minimize the difference between the input data and generated samples. Therefore, the generation efficiency of the new sample data is relatively low.

The template library construction and retrieval method according to the present application is modified based on the existing variational autoencoder VAE in the prior art as shown in Fig. 2.

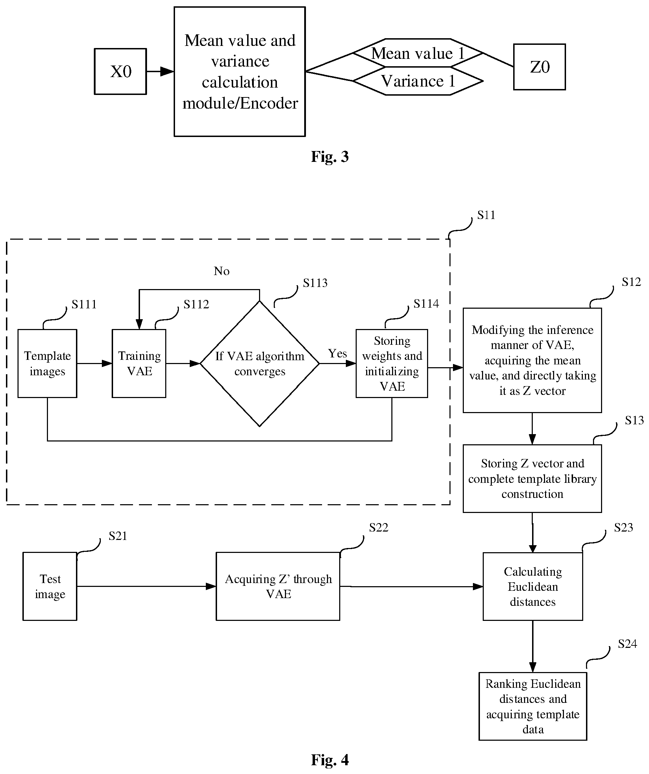

Fig. 3 shows a modified variational autoencoder VAE according to the present application.

As shown in Fig. 3, compared with the variational autoencoder VAE in the prior art, the modified variational autoencoder VAE according to the present application does not include a process of "obtaining a normal distribution based on a mean value and a variance, making the normal distribution to approximate a standard normal distribution, then obtaining each latent vector by sampling from a normal distribution approaching the standard normal distribution according to the mean value and the variance, and generating the generated data similar to the input data through a generator".

As shown in Fig. 3, in the modified variational autoencoder VAE according to the present application, the mean value in the mean value and the variance corresponding to each input data obtained by the mean value and variance calculation module is directly used as the latent vector (also referred to as Z vector), and the latent vector (also referred to as Z vector) is stored in the template library. Each Z vector corresponds to a respective input data, that is, template data. The Z vectors are obtained in batches for a plurality of input data to construct the template library. For example, template data may include the classification of the template image.

In the present application, new sample data is not generated through the Z vector, but the Z vector is directly stored, and retrieval is directly performed through the Z vector. Therefore, in the modified algorithm, it neither need to make the distribution continuously approaching the normal distribution nor need to minimize the difference between the input data and the generated data, which may improve the template library generation efficiency and make the subsequent retrieval of the template library simpler.

Fig. 4 shows a brief flow chart of an example of a template library construction and retrieval method according to the present application.

As an example, as shown in Fig. 4, step S10 may include a model training step S11, an algorithm inference step S12, and a template storage step S13.

In step S11, a template image may be used for training a model using the existing variational autoencoder VAE as shown in Fig. 2.

Specifically, an input image is input into the existing variational autoencoder VAE as shown in Fig. 2, and an entire VAE training process is performed until the value of a cost function (also referred to as a loss function) reaches an optimal value, that is, the algorithm is optimal. A trained variational autoencoder VAE is obtained by training, especially a trained mean value and variance calculation module.

As an example, as shown in Fig. 4, step S11 may include steps S111 to S114.

In step S111, a template image is input.

In step S112, a variational autoencoder VAE is trained.

In step S113, it is determined whether the VAE algorithm converges, that is, it is determined whether the value of the cost function reaches the optimal value.

In step S114, weights of the trained variational autoencoder VAE are stored. That is, the trained variational autoencoder VAE is stored.

In step S12, for the trained variational autoencoder VAE, only the mean value is obtained as the Z vector. In other words, the inference manner of the variational autoencoder VAE is modified.

The characteristic of the generative model is that the random generation process is uncontrollable. However, in order to identify specific security inspection objects, specific templates need to be stored in the template library.

Therefore, in the present application, it is necessary to obtain a fixed-dimensional vector that may be for storage and retrieval. Thus, in an inference stage, as shown in Fig. 3, only the mean value is obtained as the Z vector. The Z vector is a fixed-dimensional vector used for calculating distances during final template library construction and retrieval. For the generative model, the mean value represents a basic structure and features of the data, and the variance is a diversification operation performed by adding Gaussian noise to the basic structure, which is contrary to the purpose of identifying and storing a specific template of the present application. Therefore, in the present application, the variance is discarded, and only the mean value is used as the final Z vector.

By using only the mean value as the Z vector, the influence of randomness of the generative model may be reduced, which may facilitate achieving accuracy of subsequent operations such as target recognition.

Here, the object that changes the inference method of the VAE may be the variational autoencoder VAE trained in step S11. Specifically, the modified variational autoencoder VAE may use the relevant weights of the variational autoencoder VAE trained in step S11, in particular, the relevant weights of the trained mean value and variance calculation module, that is, the weights of the VAE stored in step S114.

In step S12, specifically, for a plurality of input data, the modified VAE is used for obtaining Z vectors {Z0, Z1, Z2 ... Zn} in batches.

Here, when constructing the template library, the input data may be template data such as template images.

In the present application, since the mean value is directly used as the Z vector, it does not need a process of "obtaining a normal distribution based on a mean value and a variance, making the normal distribution to approximate a standard normal distribution, then obtaining each latent vector by sampling from a normal distribution approaching the standard normal distribution according to the mean value and the variance", whereby not only the influence of randomness of the generative model can be reduced to facilitate achieving accuracy of subsequent operations such as target recognition, but also the template library generation efficiency can be improved.

In step S13, the obtained Z vectors {Z0, Z1, Z2 ... Zn} are stored to generate a template library.

As an optional embodiment, if there is too much template data, the Z vectors may be clustered by using a clustering algorithm to obtain cluster centers, thereby completing the template library construction. This may reduce storage space and storage workload.

Returning to Fig. 1, the template library retrieval step S20 will be further illustrated.

In step S20, for a test image, a Z vector corresponding to the test image is acquired based on a modified variational autoencoder VAE, and template data is retrieved from the template library using the Z vector.

Specifically, step S20 may include steps S21 to S24.

In step S21, a test image X' is input.

In step S22, a vector Z' corresponding to the current test image X' is obtained by using the modified variational autoencoder VAE as shown in Fig. 3.

In step S23, according to the current vector Z', Euclidean distances in space between Z' and each of the vectors {Z0, Z1, Z2 ... Zn} in the template library are calculated.

In step S24, the Euclidean distances are ranked, Zₘ having the smallest Euclidean distance is used as a latent vector most similar to Z', and the corresponding template data is obtained according to Zₘ.

In the aforesaid embodiments, the features are extracted by using the VAE algorithm, and the extracted features are more comprehensive. For the retrieval process, no more computing resources need to be used, while the retrieval may be carried out only by using Euclidean distance, and thus the retrieval efficiency is higher. In addition, for features of an X-ray image of a vehicle, it is found by actual experimental comparison that, compared with the discriminative model in which a combination of a cosine distance and other evaluation indexes is used, the obtained template is more accurate using the Euclidean distance.

Moreover, it is found by actual tests that, in the above embodiments, template retrieval has strong generalization capability even without using additional data to train the model.

Hereinafter, an embodiment in which the present application is applied to an X-ray security inspection scenario of a truck will be described. That is, the present application provides a template library construction and retrieval method for X-ray images of vehicles.

The main purpose of a vehicle template library is to establish a vehicle feature library for subsequent identification and classification of security inspection targets, such as concealed objects identification and cargo classification.

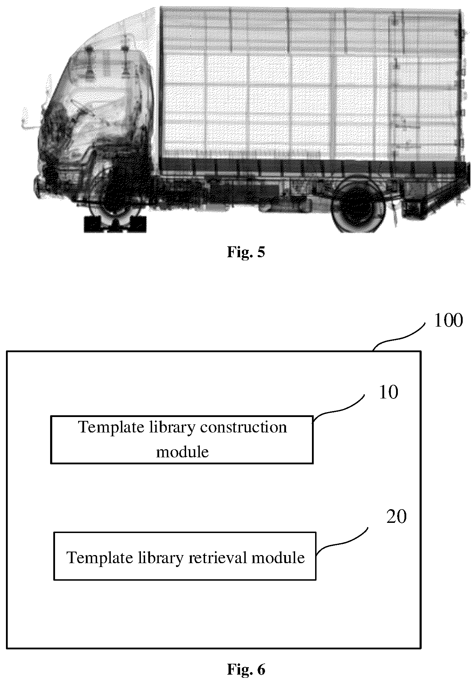

Fig. 5 shows an X-ray image of a truck scanned by X-ray.

It may be seen from Fig. 5 that, X-rays exhibit relatively strong penetration through most vehicle bodies, and the texture information of X-rays is relatively clear. Thus, it is easy to distinguish different areas of the vehicle, such as the front, chassis, and carriage.

Specifically, X-ray images have the differences compared with ordinary appearance images as follows.

### (1) Different imaging principles

For example, an X-ray imaging process may adopt single-column scanning, that is, the X-ray sensors are placed vertically and there is only one column of X-ray sensors. When the vehicle moves forward, it starts to scan the target in a column-by-column manner. After completing the scanning, performing splicing to complete the production of a single image. The scanning time is related to a size of a vehicle, but an average time is relatively long, and the image is relatively clear. The ordinary appearance image is formed by array imaging, and an average imaging time is relatively short.

### (2) Different kinds of information represented by the images

X-ray images are penetration images that can reflect internal structure, but cannot represent surface information. The ordinary appearance images may capture surface information, but are not penetrative.

### (3) Different image colors

X-ray images are gray images, which cannot use the color information of the images. Most of the ordinary appearance images are color images, and may use the color information of the images.

### (4) Different imaging sizes and resolutions

The imaging size of X-ray image is not fixed, and may be dynamically adjusted according to different target vehicles, and an average resolution is relatively high. The resolutions of ordinary appearance images are different and depend on the imaging capabilities of the sensors, but an average resolution is relatively low compared with that of the X-ray images.

As mentioned above, since there are many differences between X-ray images and ordinary appearance images, the template library construction and retrieval method also need to meet some special requirements.

Traditional identification methods mainly rely on image processing techniques, such as edge detection and feature extraction. However, this method is affected by natural conditions such as lighting and weather, and thus the identification accuracy is relatively low. In addition, due to the wide variety of types and models of vehicles, traditional methods often require separate training and classification of different types of targets, which is time-consuming and laborious.

In contrast, X-ray technology may more accurately extract target feature information, thereby achieving more efficient and more accurate target identification. For example, when the target of security inspection is a vehicle, X-ray technology may penetrate the metal shell of the vehicle to obtain structural information inside the vehicle, including the engine, tires, fuel tank, and doors, among others. This structural information is not affected by natural conditions such as lighting and weather, and thus it has higher accuracy and robustness for identification.

A vehicle template library is typically constructed by the following steps.

In a first step, X-ray images of vehicles are collected. A specialized X-ray equipment is needed to scan the vehicles and acquire images of its internal structure information. These X-ray images should include different types and models of vehicles to ensure coverage and robustness of the vehicle template library.

In a second step, image preprocessing is performed. Since X-ray images have relatively high noise and low contrast, the X-ray images may be pre-processed to improve the quality and recognizability thereof. The main steps of image preprocessing include denoising, contrast enhancement, edge detection, among others.

In a third step, feature extraction and template matching are performed. In this step, a deep learning algorithm is used for extracting features from the X-ray images and mapping them into a high-dimensional space. That is, in this process, a template library is constructed.

Specifically, in step S10', for the X-ray images of a plurality of vehicles serving as template images, latent vectors {Z0, Z1, Z2 ... Zn} corresponding to the X-ray images of the plurality of vehicles are acquired based on a variational autoencoder VAE, and the latent vectors {Z0, Z1, Z2 ... Zn} are stored to construct a vehicle template library.

In step S11', the X-ray images of the plurality of vehicles serving as template images may be input into the variational autoencoder VAE for model training.

The processing of steps S12' and S13' is the same as the aforesaid steps S12 and S13, which will not be repeated here.

After the template library is constructed, a template matching the vehicle to be identified may be retrieved from the template library using a template matching algorithm. That is, a vehicle image to be identified may be compared with the images in the vehicle template library to find the best matching vehicle type and model.

Specifically, in step S20', for the vehicle image to be identified, a Z vector corresponding to the vehicle image to be identified is acquired based on a modified variational autoencoder VAE, and matched template data is retrieved from the template library using the Z vector. In this case, the vehicle type and model may be recorded in the template data.

The main advantage of using X-ray images to construct vehicle template library is that, compared with traditional vehicle identification methods, X-ray technology may extract vehicle feature information more accurately. This method is not affected by natural conditions such as lighting and weather, and thus it has higher identification accuracy and robustness.

In addition, according to the present application, feature information of images is automatically extracted using a deep learning algorithm and mapped to a high-dimensional space. Therefore, it may handle different types and models of vehicles and achieve rapid identification. Finally, constructing the vehicle template library may greatly improve the vehicle identification efficiency. This method may quickly identify vehicle type and model, thereby improving the efficiency and accuracy of traffic management and safety assurance.

In a word, the vehicle template library construction method based on X-ray technology and deep learning algorithm is a reliable vehicle retrieval method, which has higher accuracy and robustness, and may handle different types and models of vehicles.

By constructing the vehicle template library in the aforesaid manner, an unknown vehicle model or a vehicle model without trained data may be dynamically updated without additional data to train a model, and thus it has a strong generalization capability.

### A Second Embodiment

A second embodiment of the present application provides a template library construction and retrieval apparatus. Fig. 6 shows a schematic structural view of a template library construction and retrieval apparatus 100 according to a second embodiment.

As shown in Fig. 6, the template library construction and retrieval apparatus 100 includes a template library construction module 10 and a template library retrieval module 20.

The template library construction module 10 is configured to acquire, for a plurality of template images, latent vectors {Z0, Z1, Z2 ... Zn} corresponding to the template images based on a variational autoencoder VAE, and store the latent vectors {Z0, Z1, Z2 ... Zn} to construct a template library.

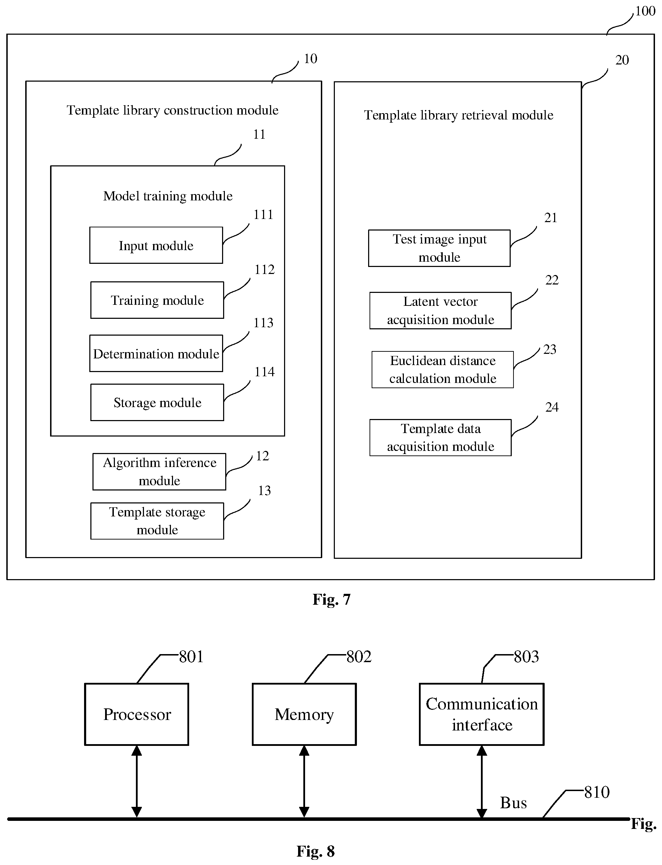

Fig. 7 shows a schematic structural view of an example of a template library construction and retrieval apparatus 100.

As shown in Fig. 7, the template library construction module 10 may include a model training module 11, an algorithm inference module 12, and a template storage module 13.

The model training module 11 uses the template images and uses the variational autoencoder VAE in the prior art to perform model training.

The model training module 11 may further include an input module 111, a training module 112, a determination module 113, and a storage module 114.

Template images are input into the input module 111.

The training module 112 trains the variational autoencoder VAE.

The determination module 113 determines whether the VAE algorithm converges, that is, determines whether the value of the cost function reaches the optimal value.

The storage module 114 stores weights of the trained variational autoencoder VAE.

The algorithm inference module 12 obtains only the mean value as the Z vector for the trained variational autoencoder VAE. In other words, the algorithm inference module 12 changes the inference method of the variational autoencoder VAE.

The template storage module 13 stores the obtained Z vectors {Z0, Z1, Z2 ... Zn} to construct a template library.

The template library retrieval module 20 is configured to acquire, for a test image, a Z vector corresponding to the test image based on the modified variational autoencoder VAE, and retrieve template data from the template library using the Z vector.

As shown in Fig. 7, the template library retrieval module 20 may include a test image input module 21, a latent vector acquisition module 22, a Euclidean distance calculation module 23, and a template data acquisition module 24.

A test image X' is input into the test image input module 21.

The latent vector acquisition module 22 acquires a vector Z' corresponding to the current test image X' by using the modified variational autoencoder VAE.

The Euclidean distance calculation module 23, according to the current vector Z', calculates the Euclidean distances in space between Z' and each of the vectors {Z0, Z1, Z2 ... Zn} in the template library.

The template data acquisition module 24 ranks the Euclidean distances, takes Zₘ having the smallest Euclidean distance as a latent vector most similar to Z', and obtains the corresponding template data according to Zₘ.

The details of each of the modules of the template library construction and retrieval apparatus according to the second embodiment are the same as the details of each of the steps in the template library construction and retrieval method according to the first embodiment described above, and the same technical effects can be obtained. Therefore, reference can be made to the first embodiment, which will not be repeated here.

### A Third Embodiment

The present application may further provide an electronic device.

Fig. 8 shows a schematic structural view of an electronic device according to a third embodiment of the present application. As shown in Fig. 8, the electronic device may include a processor 801 and a memory 802 storing computer programs or instructions.

Specifically, the processor 801 may include a central processing unit (CPU), or an Application Specific Integrated Circuit (ASIC), or may be configured as one or more integrated circuits for implementing the embodiments of the present application.

The memory 802 may include a mass memory for data or instructions. By way of example but not limitation, the memory 802 may include the Hard Disk Drive (HDD), the floppy disk drive, the flash memory, the optical disk, the magneto-optical disk, the magnetic tape, or the Universal Serial Bus (USB) drive, or a combination of two or more thereof. Where appropriate, the memory 802 may include the removable or non-removable (or fixed) medium. Where appropriate, the memory 802 may be internal or external to an integrated gateway disaster recovery system. In particular embodiments, the memory 802 is a non-volatile solid state memory. In particular embodiments, the memory 802 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), flash memory, or a combination of two or more thereof.

The processor 801 reads and executes the computer program instructions stored in the memory 802 to implement any template library construction and retrieval method in the above embodiments.

In one example, the electronic device may further include a communication interface 803 and a bus 810. As shown in Fig. 8, the processor 801, the memory 802, and the communication interface 803 are connected to each other by the bus 810 and communicate with each other.

The communication interface 803 is mainly used for achieving communication between various modules, apparatus, units, and/or devices in the embodiments of the present application.

The bus 810 includes hardware, software or both thereof for coupling components of the electronic device to each other. By way of example but not limitation, the bus may include the accelerated graphics port (AGP) or other graphics bus, the enhanced industry standard architecture (EISA) bus, the front side bus (FSB), the hyper transport (HT) interconnect, the industry standard architecture (ISA) bus, the infinite bandwidth interconnect, the low pin count (LPC) bus, the memory bus, the micro channel architecture (MCA) bus, the peripheral component interconnect (PCI) bus, the PCI-Express (PCI-X) bus, the serial advanced technology attachment (SATA) bus, the video electronics standards association local (VLB) bus, or other suitable bus, or the combination of two or more thereof. Where appropriate, the bus 810 may include one or more buses. Although the embodiments of the present application describe and illustrate particular buses, any suitable bus or interconnect is contemplated by the present application.

The electronic device may execute the template library construction and retrieval method according to the first embodiment of the present application, and achieve the template library construction and retrieval apparatus according to the second embodiment.

In addition, in combination with the method in the aforesaid embodiments, the present application may further provide a readable storage medium for implementation thereof. The readable storage medium has program instructions stored thereon. When the program instructions are executed by the processor, any template library construction and retrieval method in the above embodiments is implemented.

It should be noted that, this application is not limited to the specific configurations and processes described above and illustrated in the drawings. For the sake of brevity, a detailed description of known methods is omitted here. In the embodiments described above, a number of specific steps have been described and shown as examples. However, the method processes of the present application are not limited to the specific steps described and illustrated herein, and those skilled in the art can make various changes, modifications, and additions, or change the order between steps, after understanding the gist of the present application.

The functional blocks shown in the block diagrams described above may be implemented in hardware, software, firmware, or a combination thereof. When implemented in hardware, it may be, for example, an electronic circuit, an application specific integrated circuit (ASIC), appropriate firmware, a plug-in, a function card, among others. When implemented in software, the elements of the present application are programs or code segments used to perform the required tasks. The programs or code segments may be stored in a machine-readable medium or transmitted over a transmission medium or communication link by a data signal carried in a carrier wave. The "machine-readable medium" may include any medium that can store or transmit information. Examples of the machine-readable medium include an electronic circuit, a semiconductor memory device, an ROM, a flash memory, an erasable ROM (EROM), a floppy disk, a CD-ROM, an optical disk, a hard disk, an optical fiber medium, a radio frequency (RF) link, among others. The code segments may be downloaded via a computer network, such as the Internet, an intranet, or the like.

It should also be noted that, the exemplary embodiments mentioned in this application describe methods or systems based on a series of steps or apparatus. However, the present application is not limited to the order of the steps described above, that is, the steps may be performed in the order mentioned in the embodiments, or may be performed in an order different from that in the embodiments, or several steps may be performed at the same time.

The above are only specific implementations of the present application. Those skilled in the art can clearly understand that, for the convenience and brevity of the description, the specific working processes of the above-described apparatus, modules and units can be referred to the corresponding processes in the foregoing method embodiments, which is not repeated here.

It should be understood that, the protection scope of this application is not limited to this, and any person skilled in the art can easily think of various equivalent modifications or replacements within the technical scope disclosed in this application, and these modifications or replacements should all be covered within the scope of protection of this application.

## Claims

1. A template library construction and retrieval method, comprising:
a template library construction step of acquiring, for a template image, a latent vector corresponding to the template image based on a variational autoencoder, and storing the latent vector to construct a template library; and
a template library retrieval step of acquiring, for a test image, a latent vector corresponding to the test image based on the variational autoencoder, and retrieving template data from the template library using the latent vector.

2. The method according to claim 1, wherein the template library retrieval step comprises retrieving the template data corresponding to the test image based on only Euclidean distance between the latent vector corresponding to the test image and the latent vector in the template library.

3. The method according to claim 2, wherein the template library retrieval step comprises calculating Euclidean distance between the latent vector corresponding to the test image and the latent vector in the template library, ranking the Euclidean distance, and taking template data corresponding to the latent vector having the smallest Euclidean distance in the template library as the template data of the test image.

4. The method according to claim 1 or 2, wherein the template library construction step comprises training, for the template image, a generative variational autoencoder, and directly taking a mean value of the trained variational autoencoder as the corresponding latent vector.

5. The method according to claim 1 or 2, wherein the template image and the test image are X-ray images.

6. The method according to claim 5, wherein the template library is a template library of vehicles, and the template image and the test image are X-ray images of vehicles.

7. A template library construction and retrieval apparatus, comprising:
a template library construction module, configured to acquire, for a template image, a latent vector corresponding to the template image based on a variational autoencoder, and store the latent vector to construct a template library; and
a template library retrieval module, configured to acquire, for a test image, a latent vector corresponding to the test image based on the variational autoencoder, and retrieve template data from the template library using the latent vector.

8. The apparatus according to claim 7, wherein the template library retrieval module is configured to retrieve the template data corresponding to the test image based on only Euclidean distance between the latent vector corresponding to the test image and the latent vector in the template library.

9. The apparatus according to claim 8, wherein the template library retrieval module is configured to calculate Euclidean distance between the latent vector corresponding to the test image and the latent vector in the template library, rank the Euclidean distance, and take template data corresponding to the latent vector having the smallest Euclidean distance in the template library as template data of the test image.

10. The apparatus according to claim 7 or 8, wherein the template library construction module is configured to train, for the template image, a generative variational autoencoder, and directly take a mean value of the trained variational autoencoder as the corresponding latent vector.

11. The apparatus according to claim 7 or 8, wherein the template image and the test image are X-ray images.

12. The apparatus according to claim 11, wherein the template library is a template library of vehicles, and the template image and the test image are X-ray images of vehicles.

13. A computer-readable storage medium causing a computer to carry out following operations:
acquiring, for a template image, a latent vector corresponding to the template image based on a variational autoencoder, and storing the latent vector to construct a template library; and
acquiring, for a test image, a latent vector corresponding to the test image based on the variational autoencoder, and retrieving template data from the template library using the latent vector.
